# EUROPEAN PATENT APPLICATION

(11) **EP 4 674 658 A1**
(43) Date of publication of application: **07.01.2026**
(21) Application number: 24909516.7
(22) Date of filing: 21.05.2024
(51) Int. Cl.: B60K 6/365, B60K 6/38

(54) **HYBRID POWER SYSTEM AND VEHICLE**

(30) Priority: 29.12.2023 CN 202323669597 U
(71) Applicant: Chery Automobile Co., Ltd., Wuhu, Anhui 241006 (CN)
(72) Inventor: ZHANG, Hengxian, Wuhu, Anhui 241006 (CN); ZHOU, Zhiguang, Wuhu, Anhui 241006 (CN); LI, Shuangluan, Wuhu, Anhui 241006 (CN); YAO, Wangfei, Wuhu, Anhui 241006 (CN); ZOU, Junwu, Wuhu, Anhui 241006 (CN)
(74) Representative: Yang, Shu
(86) International application number: PCT/CN2024/094507
(87) International publication number: WO 2025/138549

(57) **Abstract**

Provided is a hybrid power system, including: an engine (10), a first motor (11), a planetary gear train (30), a first main shaft (21), and a second main shaft (22), the first main shaft (21) and the second main shaft (22) are coaxially spaced apart, a first end of the first main shaft (21) is drivingly connected to an output shaft of the engine (10), and the second main shaft (22) is configured to be drivingly connected to wheels; the planetary gear train (30) includes: a sun gear (31), a plurality of planetary gears (32), a planetary carrier (33), a ring gear (34), and a brake (35); and the planetary gear train (30) is disposed in a rotor (110) of the first motor (11), and an inner circumferential wall of the rotor (110) of the first motor (11) is connected to an outer circumferential wall of the ring gear (34).

## Description

The present disclosure claims priority to Chinese Patent Application No. 202323669597.2, filed on December 29, 2023, and entitled "HYBRID POWER SYSTEM AND VEHICLE," the content of which is incorporated herein by reference in its entirety.

### TECHNICAL FIELD

The present disclosure relates to the field of vehicle technologies, and in particular to a hybrid power system and a vehicle.

### BACKGROUND

Most of conventional vehicles use fossil fuels (such as gasoline and diesel) to power their engines, with the resulting exhaust emissions causing environmental pollution. Therefore, it is urgent to replace fossil fuels with pollution-free new energy sources (such as electrical energy) for powering vehicles, and thus new energy vehicles are the trend of development.

In related art, a hybrid power system typically includes an engine, a motor, and a gearbox. A planetary gear train, a first main shaft, and a second main shaft are disposed in the gearbox. Transmission components of the planetary gear train include a sun gear, a planetary gear, a planetary carrier, and a ring gear. The first main shaft is drivingly connected to a transmission component in the planetary gear train. The second main shaft is drivingly connected to another transmission component in the planetary gear train.

Because many power sources and transmission components are disposed in the hybrid power system, and all of the power sources and transmission components need to be installed on the first main shaft or the second main shaft, the first main shaft or second main shaft is designed to be relatively long. In this way, the hybrid power system occupies a relatively large axial space, which is not conducive to achieving the lightweight design of the hybrid power system.

### SUMMARY

Embodiments of the present disclosure provide a hybrid power system and a vehicle, which can improve the problem that the hybrid power system occupies a relatively large axial space, and achieve the lightweight design of the hybrid power system. The technical solutions are as follows.

According to one aspect, embodiments of the present disclosure provide a hybrid power system. The hybrid power system includes: an engine, a first motor, a planetary gear train, a first main shaft, and a second main shaft, wherein the first main shaft and the second main shaft are coaxially spaced apart, a first end of the first main shaft is drivingly connected to an output shaft of the engine, the second main shaft is configured to be drivingly connected to wheels, the planetary gear train includes: a sun gear, a plurality of planetary gears, a planetary carrier, a ring gear, and a brake, the ring gear and the sun gear are coaxially disposed, the plurality of planetary gears are disposed between the sun gear and the ring gear, and are engaged with the sun gear and the ring gear, the planetary carrier is coaxially connected to a second end of the first main shaft, the sun gear is movably sleeved over the first main shaft, the brake is configured to brake the sun gear, the ring gear is coaxially connected to the second main shaft, the planetary gear train is disposed in a rotor of the first motor, and the inner circumferential wall of the rotor of the first motor is connected to the outer circumferential wall of the ring gear.

In an implementation of the embodiments of the present disclosure, the axial length of the ring gear is less than or equal to the axial length of the rotor of the first motor.

In another implementation of the embodiment of the present disclosure, the hybrid power system further includes a housing, wherein the first motor, the planetary gear train, and the second main shaft are disposed in the housing, the first main shaft is movably inserted in the housing, the first end of the first main shaft is outside the housing, and the second end of the first main shaft is in the housing.

In another implementation of the embodiments of the present disclosure, the planetary gear train further includes a first hollow shaft, wherein the first hollow shaft is movably sleeved over the first main shaft, an end of the first hollow shaft is coaxially connected to the sun gear, the brake includes a first steel plate and a first clutch plate, the outer circumferential wall of the first steel plate of the brake is connected to an inner wall of the housing, the first clutch plate of the brake is movably sleeved over the first hollow shaft in an axial direction, and the first clutch plate of the brake is circumferentially locked to the first hollow shaft.

In another implementation of the embodiments of the present disclosure, the hybrid power system further includes a clutch, a gear train, and a third main shaft, wherein the third main shaft is parallel to the second main shaft, and the clutch is connected to an input gear of the gear train and the second main shaft, an output gear of the gear train is coaxially connected to the third main shaft, and the third main shaft is configured to be drivingly connected to wheels.

In another implementation of the embodiments of the present disclosure, the hybrid power system further includes a second hollow shaft, wherein the second hollow shaft is movably sleeved over the second main shaft, the clutch includes a clutch colar, a second steel plate, and a second clutch plate, wherein the second steel plate of the clutch and the second clutch plate of the clutch are disposed in the clutch colar, the clutch colar is coaxially connected to the second main shaft, the outer circumferential wall of the second steel plate of the clutch is connected to the inner wall of the clutch colar, the second clutch plate of the clutch is movably sleeved over the second hollow shaft in an axial direction, the second clutch plate of the clutch is circumferentially locked to the second hollow shaft, and the input gear of the gear train is coaxially connected to an end of the second hollow shaft.

In another implementation of the embodiments of the present disclosure, the hybrid power system further includes a second motor and a first drive gear, wherein an output shaft of the second motor is drivingly connected to the first drive gear, and the first drive gear is engaged with the output gear of the gear train.

In another implementation of the embodiments of the present disclosure, the hybrid power system further includes a second drive gear and a differential, wherein the second drive gear is fixedly sleeved over the third main shaft, the differential is drivingly connected to the second drive gear, and the third main shaft is drivingly connected to the wheels via the differential.

In another implementation of the embodiments of the present disclosure, the hybrid power system further includes a power supply assembly, wherein the power supply assembly includes: a battery and an inverter, wherein the inverter is separately connected to the battery and the first motor.

According to another aspect, embodiments of the present disclosure provide a vehicle. The vehicle includes a vehicle body and a hybrid power system, wherein the hybrid power system is disposed in the vehicle body and includes: an engine, a first motor, a planetary gear train, a first main shaft, and a second main shaft, wherein the first main shaft and the second main shaft are coaxially spaced apart, a first end of the first main shaft is drivingly connected to an output shaft of the engine, the second main shaft is configured to be drivingly connected to wheels, the planetary gear train includes: a sun gear, a plurality of planetary gears, a planetary carrier, a ring gear, and a brake, the ring gear is coaxially disposed with the sun gear, the plurality of planetary gears are disposed between the sun gear and the ring gear, and are respectively engaged with the sun gear and the ring gear, the planetary carrier is coaxially connected to a second end of the first main shaft, the sun gear is movably sleeved over the first main shaft, the brake is configured to brake the sun gear, the ring gear is coaxially connected to the second main shaft,, the planetary gear train is disposed in a rotor of the first motor,, and the inner circumferential wall of the rotor of the first motor is connected to the outer circumferential wall of the ring gear.

In an implementation of the embodiments of the present disclosure, the axial length of the ring gear is less than or equal to the axial length of the rotor of the first motor.

In another implementation of the embodiments of the present disclosure, the hybrid power system further includes a housing, wherein the first motor, the planetary gear train, and the second main shaft are disposed in the housing, the first main shaft is movably inserted in the housing, the first end of the first main shaft is outside the housing, and the second end of the first main shaft is in the housing.

In another implementation of the embodiments of the present disclosure, the planetary gear train further includes a first hollow shaft, wherein the first hollow shaft is movably sleeved over the first main shaft, an end of the first hollow shaft is coaxially connected to the sun gear, the brake includes a first steel plate and a first clutch plate, the outer circumferential wall of the first steel plate of the brake is connected to an inner wall of the housing, the first clutch plate of the brake is movably sleeved over the first hollow shaft in an axial direction, and the first clutch plate of the brake is circumferentially locked to the first hollow shaft.

In another implementation of the embodiments of the present disclosure, the hybrid power system further includes a clutch, a gear train, and a third main shaft, wherein the third main shaft is parallel to the second main shaft, and the clutch is connected to an input gear of the gear train and the second main shaft, an output gear of the gear train is coaxially connected to the third main shaft, and the third main shaft is configured to be drivingly connected to wheels.

In another implementation of the embodiments of the present disclosure, the hybrid power system further includes a second hollow shaft, wherein the second hollow shaft is movably sleeved over the second main shaft, the clutch includes a clutch colar, a second steel plate, and a second clutch plate, the second steel plate of the clutch and the second clutch plate of the clutch are disposed in the clutch colar, the clutch colar is coaxially connected to the second main shaft, the outer circumferential wall of the second steel plate of the clutch is connected to the inner wall of the clutch colar, the second clutch plate of the clutch is movably sleeved over the second hollow shaft in an axial direction, the second clutch plate of the clutch is circumferentially locked to the second hollow shaft, and the input gear of the gear train is coaxially connected to an end of the second hollow shaft.

The technical solutions according to the embodiments of the present disclosure at least achieve the following beneficial effects.

The hybrid power system according to the embodiments of the present disclosure includes the engine, the first motor, the planetary gear train, the first main shaft, and the second main shaft, wherein the planetary carrier of the planetary gear train is drivingly connected to the first main shaft, and the ring gear of the planetary gear train is drivingly connected to the second main shaft. In this way, upon the power being input from the planetary carrier of the planetary gear train, the power is transmitted via the planetary gear train to the ring gear of the planetary gear train for output. In addition, the planetary gear train is mounted in the rotor of the first motor, and the outer circumferential wall of the ring gear of the planetary gear train is connected to the inner circumferential wall of the rotor of the first motor. In this way, the power of the first motor is transmitted via the ring gear to the planetary gear train, such that the power of the first motor is integrated into the hybrid power system. Moreover, because the planetary gear train is disposed in the rotor of the first motor, an axial space in the hybrid power system for mounting of the planetary gear train is reduced, which greatly reduces the axial dimension of the hybrid power system, improves the problem that the hybrid power system occupies a relatively large axial space, and achieves the lightweight design of the hybrid power system.

### BRIEF DESCRIPTION OF DRAWINGS

For clearer descriptions of the technical solutions according to the embodiments of the present disclosure, the following briefly introduces the accompanying drawings required for describing the embodiments. Apparently, the accompanying drawings in the following description show merely some examples of the present disclosure, and those of ordinary skill in the art may still derive other drawings from these accompanying drawings without creative efforts.
FIG. 1 is a schematic structural diagram of a hybrid power system according to some embodiments of the present disclosure;
FIG. 2 is a schematic diagram of energy transmission in a hybrid power system according to some embodiments of the present disclosure;
FIG. 3 is a schematic diagram of energy transmission in a hybrid power system according to some embodiments of the present disclosure;
FIG. 4 is a schematic diagram of energy transmission in a hybrid power system according to some embodiments of the present disclosure;
FIG. 5 is a schematic diagram of energy transmission in a hybrid power system according to some embodiments of the present disclosure; and
FIG. 6 is a schematic diagram of energy transmission in a hybrid power system according to some embodiments of the present disclosure.

The symbols in the accompanying drawings are illustrated as follows:
10-engine; 11-first motor; 110-rotor; 12-second motor;
21-first main shaft; 22-second main shaft; 23-third main shaft;
30-planetary gear train; 31-sun gear; 32-planetary gear; 33-planetary carrier; 34-ring gear; 35-brake; 351-first steel plate; 352-first clutch plate; 36-first hollow shaft; 37-second hollow shaft; 401-steel plate; 402-clutch plate; 403-clutch colar;
50-clutch;
60-gear train;
71-first drive gear; 72-second drive gear;
80-differential;
90-power supply assembly; 91-battery; and 92-inverter.

### DETAILED DESCRIPTION

For clearer descriptions of the objectives, technical solutions, and advantages of the present disclosure, the embodiments of the present disclosure are further described in detail below with reference to the accompanying drawings.

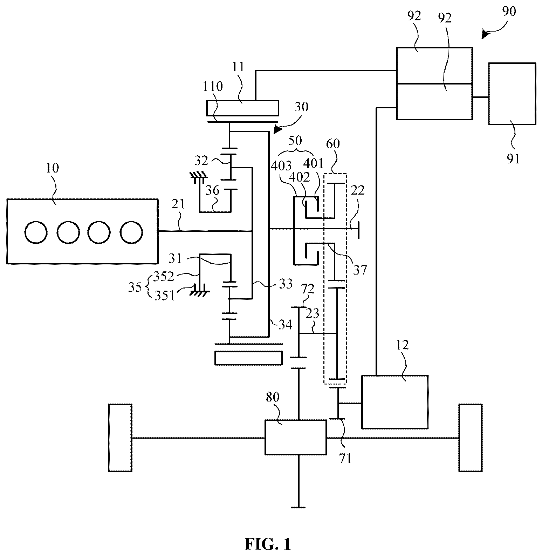

FIG. 1 is a schematic structural diagram of a hybrid power system according to some embodiments of the present disclosure. As shown in FIG. 1, the hybrid power system includes: an engine 10, a first motor 11, a planetary gear train 30, a first main shaft 21, and a second main shaft 22.

As shown in FIG. 1, the first main shaft 21 and the second main shaft 22 are coaxially spaced apart, a first end of the first main shaft 21 is drivingly connected to an output shaft of the engine 10, and the second main shaft 22 is configured to be drivingly connected to wheels.

As shown in FIG. 1, the planetary gear train 30 includes: a sun gear 31, a plurality of planetary gears 32, a planetary carrier 33, a ring gear 34, and a brake 35. The ring gear 34 is coaxially disposed with the sun gear 31, the plurality of planetary gears 32 are disposed between the sun gear 31 and the ring gear 34, and are engaged with the sun gear 31 and the ring gear 34, the planetary carrier 33 is coaxially connected to a second end of the first main shaft 21, the sun gear 31 is movably sleeved over the first main shaft 21, the brake 35 is configured to brake the sun gear 31, and the ring gear 34 is coaxially connected to the second main shaft 22.

As shown in FIG. 1, the planetary gear train 30 is disposed in a rotor 110 of the first motor 11, and the inner circumferential wall of the rotor 110 of the first motor 11 is connected to the outer circumferential wall of the ring gear 34.

The hybrid power system according to some embodiments of the present disclosure includes the engine 10, the first motor 11, the planetary gear train 30, the first main shaft 21, and the second main shaft 22. The planetary carrier 33 of the planetary gear train 30 is drivingly connected to the first main shaft 21, and the ring gear 34 of the planetary gear train 30 is drivingly connected to the second main shaft 22. In this way, upon the power being input from the planetary carrier 33 of the planetary gear train 30, the power is transmitted via the planetary gear train 30 to the ring gear 34 of the planetary gear train 30 for output. In addition, the planetary gear train 30 is mounted in the rotor 110 of the first motor 11, and the outer circumferential wall of the ring gear 34 of the planetary gear train 30 is connected to the inner circumferential wall of the rotor 110 of the first motor 11. In this way, power of the first motor 11 is transmitted via the ring gear 34 to the planetary gear train 30, such that the power of the first motor 11 is integrated into the hybrid power system. Moreover, because the planetary gear train 30 is disposed in the rotor 110 of the first motor 11, an axial space in the hybrid power system for mounting of the planetary gear train 30 is reduced, which greatly reduces the axial dimension of the hybrid power system, improves the problem that the hybrid power system occupies a relatively large axial space, and achieves the lightweight design of the hybrid power system.

Optionally, the axial length of the ring gear 34 is less than or equal to the axial length of the rotor 110 of the first motor 11. The ring gear 34 is a transmission component in the planetary gear train 30 that surrounds the sun gear 31, the planetary gear 32, and the planetary carrier 33. Therefore, the axial length of the ring gear 34 is greater than the axial lengths of the sun gear 31, the planetary gear 32, and the planetary carrier 33.

In some embodiments of the present disclosure, the axial length of the ring gear 34 is defined to be less than the axial length of the rotor 110 of the first motor 11, such that the planetary gear train 30 does not exceed the length of the rotor 110 of the first motor 11 in the axial direction, and the planetary gear train 30 is completely wrapped by the rotor 110 of the first motor 11, thereby minimizing a space of the hybrid power system occupied by the planetary gear train 30.

Optionally, as shown in FIG. 1, the hybrid power system further includes a housing. The first motor 11, the planetary gear train 30, and the second main shaft 22 are disposed in the housing, the first main shaft 21 is movably inserted in the housing, the first end of the first main shaft 21 is outside the housing, and the second end of the first main shaft 21 is in the housing.

In the above implementation, the planetary gear train 30 being disposed in the rotor 110 of the first motor 11 is equivalent to the first motor 11 and the planetary gear train 30 forming an integral structure. In this way, during assembly of the hybrid power system, the first motor 11 and the planetary gear train 30 are mounted together in the housing, such a separate mounting structure is not needed to provide for the first motor 11 in the space of a vehicle body, which is conducive to improving the assembly efficiency of the hybrid power system.

Optionally, as shown in FIG. 1, the planetary gear train 30 further includes a first hollow shaft 36. The first hollow shaft 36 is movably sleeved over the first main shaft 21, and an end of the first hollow shaft 36 is coaxially connected to the sun gear 31.

As shown in FIG. 1, the brake 35 includes a first steel plate 351 and a first clutch plate 352, the outer circumferential wall of the first steel plate 351 of the brake 35 is connected to an inner wall of the housing, the first clutch plate 352 of the brake 35 is movably sleeved over the first hollow shaft 36 in an axial direction, and the first clutch plate 352 of the brake 35 is circumferentially locked to the first hollow shaft 36.

For example, an axially extending clamping groove is disposed in the inner wall of the housing, a projection is disposed on the outer circumferential wall of the first steel plate 351 of the brake 35, and the projection can slide axially in the clamping groove, such that the first steel plate 351 is circumferentially locked upon being mounted on the housing.

For example, an axially extending clamping groove is disposed in the outer wall of the first hollow shaft 36, a projection is disposed on the hole wall of an inner hole of the first clutch plate 352 of the brake 35, and the projection can slide in the clamping groove along the axial direction of the first hollow shaft 36, such that the first clutch plate 352 is circumferentially locked to the first hollow shaft 36.

In the case that the first brake 35 needs to be controlled, a driving apparatus controls the first steel plate 351 and the first clutch plate 352 to fit together, such that the first hollow shaft 36 is fixedly connected to the housing, thereby braking the sun gear 31 of the planetary gear train 30.

Optionally, as shown in FIG. 1, the hybrid power system further includes a clutch 50, a gear train 60, and a third main shaft 23, wherein the third main shaft 23 is distributed parallel to the second main shaft 22.

As shown in FIG. 1, the clutch 50 is connected to an input gear of the gear train 60 and the second main shaft 22, an output gear of the gear train 60 is coaxially connected to the third main shaft 23, and the third main shaft 23 is configured to be drivingly connected to wheels.

Power transmission between the planetary gear train 30 and the wheels can be interrupted by the clutch 50. Thus, in the case that only the engine 10 needs to be controlled to output power to the first motor 11 to drive the first motor 11 to generate electricity, the clutch 50 can be controlled to disengage, such that the power of the engine 10 is completely transmitted to the first motor 11, and the first motor 11 is driven to generate electricity, which prevents the power of the engine 10 from being transmitted to the wheels and avoids power loss.

Optionally, as shown in FIG. 1, the hybrid power system further includes a second hollow shaft 37, wherein the second hollow shaft 37 is movably sleeved over the second main shaft 22.

As shown in FIG. 1, the clutch 50 includes a clutch colar 403, a second steel plate 401, and a second clutch plate 402, the second steel plate 401 and the second clutch plate 402 are disposed in the clutch colar 403, the clutch colar 403 is coaxially connected to the second main shaft 22, the outer circumferential wall of the second steel plate 401 of the clutch 50 is connected to the inner wall of the clutch colar 403, the second clutch plate 402 of the clutch 50 is movably sleeved over the second hollow shaft 37 in an axial direction, and the second clutch plate 402 of the clutch 50 is circumferentially locked to the second hollow shaft 37.

As shown in FIG. 1, the input gear of the gear train 60 is coaxially connected to an end of the second hollow shaft 37, the output gear of the gear train 60 is coaxially connected to an end of the third main shaft 23, and the third main shaft 23 is configured to be drivingly connected to wheels.

For example, an axially extending clamping groove is disposed in the inner wall of the clutch colar 403, a projection is disposed on the outer circumferential wall of the second steel plate 401 of the clutch 50, and the projection can slide in the clamping groove along the axial direction of the clutch colar 403, such that the second steel plate 401 is circumferentially locked upon being mounted on the clutch colar 403.

For example, an axially extending clamping groove is disposed in the outer wall of the second hollow shaft 37, a projection is disposed on the hole wall of an inner hole of the second clutch plate 402 of the clutch 50, and the projection can slide in the clamping groove along the axial direction of the second hollow shaft 37, such that the second clutch plate 402 can be circumferentially locked to the second hollow shaft 37.

In the case that the clutch 50 needs to be controlled to engage, a driving apparatus controls the second steel plate 401 and the second clutch plate 402 to fit together, such that the second hollow shaft 37 is drivingly connected to the clutch colar 403. In this way, the power transmitted from the planetary gear train 30 to the clutch 50 is transmitted to the second hollow shaft 37 via the clutch 50, and then transmitted to the third main shaft 23 via the second hollow shaft 37 and the gear train 60. Finally, the power is transmitted to the wheels via the third main shaft 23 to drive the wheels to rotate.

In some embodiments of the present disclosure, each gear train 60 includes at least an input gear and an output gear. The input gear and the output gear are drivingly connected to each other, such that the power transmitted to the output gear through the input gear.

Optionally, in the gear train 60, the input gear and the output gear are directly engaged with each other. Alternatively, at least one connecting gear is disposed between the input gear and the output gear.

It should be noted that how many gears are specifically provided in the gear train 60 is determined based on actual needs.

Optionally, as shown in FIG. 1, the hybrid power system further includes a second motor 12 and a first drive gear 71. An output shaft of the second motor 12 is drivingly connected to the first drive gear 71, and the first drive gear 71 is engaged with the output gear of the gear train 60.

The second motor 12 is used as a drive motor for outputting power to drive the vehicle to travel.

In the above implementation, the second motor 12 is configured to enhance the dynamic performance of the hybrid power system. Moreover, the second motor 12 is connected to the third main shaft 23 via the gear train 60 to transmit power to the wheels, which avoids providing a separate transmission mechanism for the second motor 12, such that the cost of the hybrid power system is effectively reduced.

Optionally, as shown in FIG. 1, the hybrid power system further includes a second drive gear 72 and a differential 80. The second drive gear 72 is fixedly sleeved over the third main shaft 23, the differential 80 is drivingly connected to the second drive gear 72, and the third main shaft 23 is drivingly connected to the wheels via the differential 80.

In some embodiments of the present disclosure, an input gear of the differential 80 is engaged with the second drive gear 72, such that the power transmitted from the third main shaft 23 is received, thereby achieving the purpose of driving the wheels to rotate.

The differential 80 causes the wheels connected to the output shaft of the differential 80 to rotate at different rotational speeds. In the case that the car is turning during traveling, the turning radius of the inner wheels of the vehicle is different from that of the outer wheels of the vehicle, and the turning radius of the outer wheels is greater than that of the inner wheels. This requires that the rotational speed of the outer wheels to be higher than the rotational speed of the inner wheels during turning. By using the differential 80, two wheels are rolled different rotational speeds, thereby achieving a difference between the rotational speeds of the two wheels.

Optionally, as shown in FIG. 1, the hybrid power system further includes a power supply assembly 90. The power supply assembly 90 includes a battery 91 and an inverter 92, and the inverter 92 is separately connected to the battery 91 and the first motor 11.

For example, the power supply assembly 90 includes two inverters 92, the two inverters 92 are separately connected to the battery 91, the first motor 11 is connected to one of the two inverters 92, and the second motor 12 is connected to the other of the two inverters 92.

By providing two inverters 92, one inverter 92 is configured to connect the battery 91 to the first motor 11, and the other inverter 92 is configured to connect the battery 91 to the second motor 12. The battery 91 is a rechargeable battery 91. The inverters 92 are disposed on an output circuit of the battery 91, and are configured to drive the first motor 11 or the second motor 12 upon converting a direct current output from the battery 91 into a three-phase alternating current.

The hybrid power system illustrated in FIG. 1 is an example to describe various power modes of the hybrid power system.

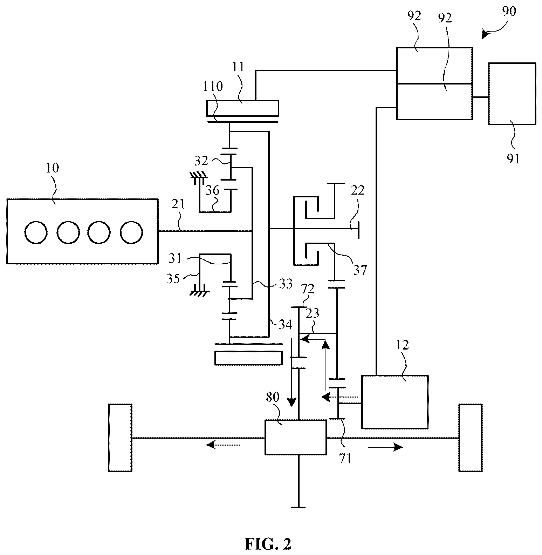

In the case that the hybrid power system is in a pure electric mode, as shown in FIG. 2, the engine 10 and the first motor 11 do not operate, the clutch 50 is disengaged, and the vehicle is driven to travel by the second motor 12. The power supply assembly 90 discharges. In the case that the inverter 92 converts a direct current into a three-phase alternating current, the output shaft of the second motor 12 is driven to rotate. The second motor 12 converts electrical energy into mechanical energy and transmits the mechanical energy to the third main shaft 23. Then, the mechanical energy is transmitted to the wheels via the second drive gear 72 and the differential 80. Therefore, the second motor 12 drives the vehicle to enter a driving mode.

In the pure electric mode, the same principle can be applied to achieve reverse conditions. Details are not repeated in the embodiments of the present disclosure.

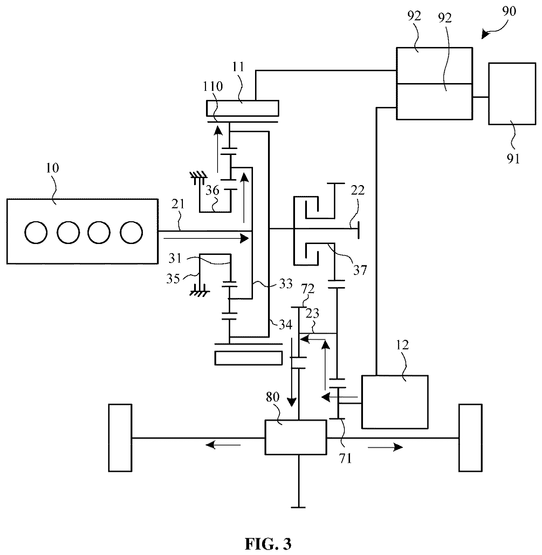

In the case that the hybrid power system is in a series hybrid drive mode, as shown in FIG. 3, the engine 10, the first motor 11, and the second motor 12 work together in coordination to jointly drive the vehicle to travel. In this mode, the clutch 50 is disengaged, the engine 10 operates in a high efficiency range and drives the first motor 11 to generate electricity, the generated electrical energy is supplied to the second motor 12 to drive the vehicle to travel, and excess electrical energy is stored in the power supply assembly 90. In the case that the generated electricity is insufficient, the power supply assembly 90 supplements the electricity. The first motor 11 and the power supply assembly 90 jointly satisfy the power demand of the second motor 12.

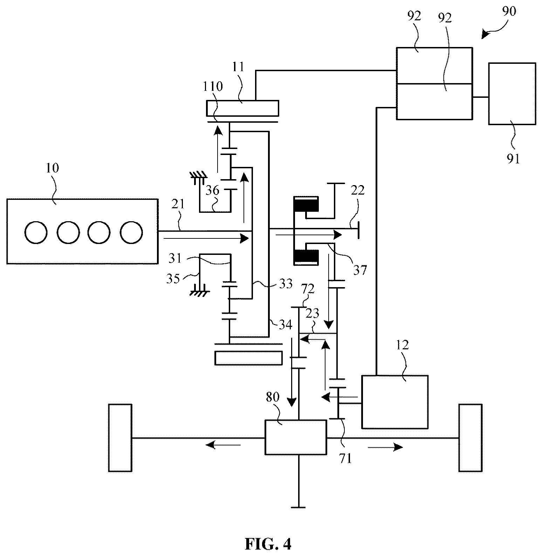

In the case that the hybrid power system is in a parallel hybrid drive mode, as shown in FIG. 4, the engine 10, the first motor 11, and the second motor 12 work together to jointly drive the vehicle to travel, such that a relatively large power is output, and the dynamic performance of the entire vehicle is improved. In this mode, the clutch 50 is engaged, and power of the engine 10 is transmitted to the planetary gear train 30. In addition, part of the power of the engine 10 is transmitted to the first motor 11 to drive the first motor 11 to generate electricity, and another part of the power of the engine 10 is transmitted to the third main shaft 23 through the second main shaft 22, the clutch 50, and the gear train 60 sequentially, and is coupled with the power of the second motor 12 at the third main shaft 23. Finally, jointly driving the wheels to rotate by the engine 10 and the second motor 12 is achieved.

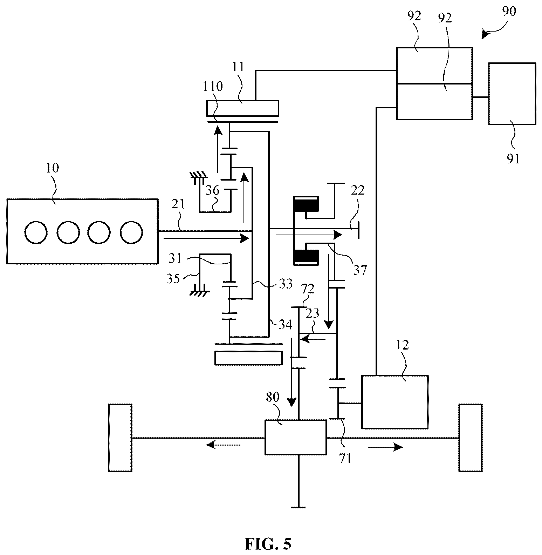

In the case that the hybrid power system is in an engine 10 direct drive mode, as shown in FIG. 5, the clutch 50 is engaged, the second motor 12 does not operate, and power of the engine 10 is transmitted to the planetary gear train 30. In addition, part of the power of the engine 10 is transmitted to the first motor 11 to drive the first motor 11 to generate electricity, another part of the power of the engine 10 is transmitted to the third main shaft 23 through the second main shaft 22, the clutch 50, and the gear train 60sequentially, and the wheels are driven to rotate solely by the engine 10.

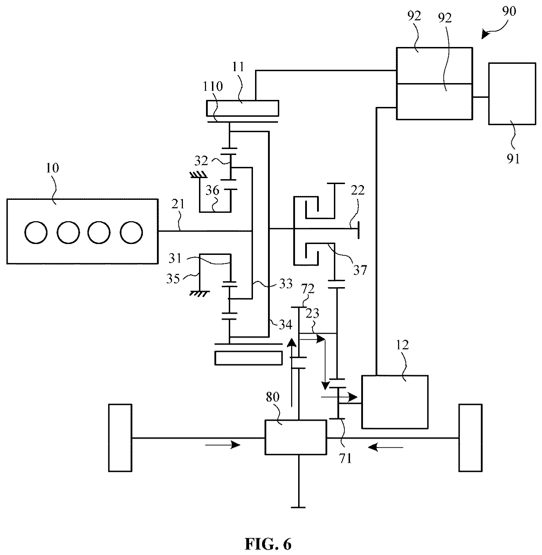

In the case that the hybrid power system is in an energy recovery mode, as shown in FIG. 6, the vehicle is in a coasting or braking condition, the hybrid power system provides a reverse torque for the vehicle, and the second motor 12 provides a negative torque for braking energy recovery, such that part of the kinetic energy of the vehicle is stored in the power supply assembly 90 for spare use.

Embodiments of the present disclosure provide a vehicle. The vehicle includes a vehicle body and a hybrid power system, wherein the hybrid power system is disposed in the vehicle body.

As shown in FIG. 1, the hybrid power system includes: an engine 10, a first motor 11, a planetary gear train 30, a first main shaft 21, and a second main shaft 22.

As shown in FIG. 1, the first main shaft 21 and the second main shaft 22 are coaxially spaced apart, a first end of the first main shaft 21 is drivingly connected to an output shaft of the engine 10, and the second main shaft 22 is configured to be drivingly connected to wheels.

As shown in FIG. 1, the planetary gear train 30 includes: a sun gear 31, a plurality of planetary gears 32, a planetary carrier 33, a ring gear 34, and a brake 35, the ring gear 34 and the sun gear 31 are coaxially disposed, the plurality of planetary gears 32 are disposed between the sun gear 31 and the ring gear 34, and are engaged with the sun gear 31 and the ring gear 34, the planetary carrier 33 is coaxially connected to a second end of the first main shaft 21, the sun gear 31 is movably sleeved over the first main shaft 21, the brake 35 is configured to brake the sun gear 31, and the ring gear 34 is coaxially connected to the second main shaft 22.

As shown in FIG. 1, the planetary gear train 30 is disposed in a rotor 110 of the first motor 11, and the inner circumferential wall of the rotor 110 of the first motor 11 is connected to the outer circumferential wall of the ring gear 34.

The hybrid power system according to some embodiments of the present disclosure includes the engine 10, the first motor 11, the planetary gear train 30, the first main shaft 21, and the second main shaft 22. The planetary carrier 33 of the planetary gear train 30 is drivingly connected to the first main shaft 21, and the ring gear 34 of the planetary gear train 30 is drivingly connected to the second main shaft 22. In this way, upon being input from the planetary carrier 33 of the planetary gear train 30, the power is transmitted via the planetary gear train 30 to the ring gear 34 of the planetary gear train 30 for output. In addition, the planetary gear train 30 is mounted in the rotor 110 of the first motor 11, and the outer circumferential wall of the ring gear 34 of the planetary gear train 30 is connected with the inner circumferential wall of the rotor 110 of the first motor 11. In this way, the power of the first motor 11 is transmitted through the ring gear 34 to the planetary gear train 30, such that the power of the first motor 11 is integrated into the hybrid power system. Moreover, because the planetary gear train 30 is disposed in the rotor 110 of the first motor 11, an axial space in the hybrid power system for mounting of the planetary gear train 30 is reduced, which greatly reduces the axial dimension of the hybrid power system, improves the problem that the hybrid power system occupies a relatively large axial space, and achieves the lightweight design of the hybrid power system.

Optionally, the axial length of the ring gear 34 is less than or equal to the axial length of the rotor 110 of the first motor 11. The ring gear 34 is a transmission component in the planetary gear train 30 that surrounds the sun gear 31, the planetary gear 32, and the planetary carrier 33. Therefore, the axial length of the ring gear 34 is greater than the axial lengths of the sun gear 31, the planetary gear 32, and the planetary carrier 33.

In some embodiments of the present disclosure, the axial length of the ring gear 34 is defined to be less than the axial length of the rotor 110 of the first motor 11, such that the planetary gear train 30 does not exceed the length of the rotor 110 of the first motor 11 in the axial direction, and the planetary gear train 30 is completely wrapped by the rotor 110 of the first motor 11, thereby minimizing a space of the hybrid power system occupied by the planetary gear train 30.

Optionally, as shown in FIG. 1, the hybrid power system further includes a housing, wherein the first motor 11, the planetary gear train 30, and the second main shaft 22 are disposed in the housing. The first main shaft 21 is movably inserted in the housing, the first end of the first main shaft 21 is outside the housing, and the second end of the first main shaft 21 is in the housing.

In the above implementation, the planetary gear train 30 disposed in the rotor 110 of the first motor 11 is equivalent to the first motor 11 and the planetary gear train 30 forming an integral structure. In this way, during assembly of the hybrid power system, the first motor 11 and the planetary gear train 30 are mounted together in the housing, such that a separate mounting structure is not needed to provide for the first motor 11 in the space of the vehicle body, which is conducive to improving the assembly efficiency of the hybrid power system.

Optionally, as shown in FIG. 1, the planetary gear train 30 further includes a first hollow shaft 36. The first hollow shaft 36 is movably sleeved over the first main shaft 21, and an end of the first hollow shaft 36 is coaxially connected to the sun gear 31.

As shown in FIG. 1, the brake 35 includes a first steel plate 351 and a first clutch plate 352, the outer circumferential wall of the first steel plate 351 of the brake 35 is connected to an inner wall of the housing, the first clutch plate 352 of the brake 35 is movably sleeved over the first hollow shaft 36 in an axial direction, and the first clutch plate 352 of the brake 35 is circumferentially locked to the first hollow shaft 36.

For example, an axially extending clamping groove is disposed in the inner wall of the housing, a projection is disposed on the outer circumferential wall of the first steel plate 351 of the brake 35, and the projection can slide axially in the clamping groove, such that the first steel plate 351 is circumferentially locked upon being mounted on the housing.

For example, an axially extending clamping groove is disposed in the outer wall of the first hollow shaft 36, a projection is disposed on the hole wall of an inner hole of the first clutch plate 352 of the brake 35, and the projection can slide in the clamping groove along the axial direction of the first hollow shaft 36, such that the first clutch plate 352 is circumferentially locked to the first hollow shaft 36.

In the case that the first brake 35 needs to be controlled, a driving apparatus controls the first steel plate 351 and the first clutch plate 352 to fit together, such that the first hollow shaft 36 is fixedly connected to the housing, thereby braking the sun gear 31 of the planetary gear train 30.

Optionally, as shown in FIG. 1, the hybrid power system further includes a clutch 50, a gear train 60, and a third main shaft 23, wherein the third main shaft 23 is distributed parallel to the second main shaft 22.

As shown in FIG. 1, the clutch 50 is connected to an input gear of the gear train 60 and the second main shaft 22, an output gear of the gear train 60 is coaxially connected to the third main shaft 23, and the third main shaft 23 is configured to be drivingly connected to wheels.

Power transmission between the planetary gear train 30 and the wheels can be interrupted by the clutch 50. Thus, in the case that only the engine 10 needs to be controlled to output power to the first motor 11 to drive the first motor 11 to generate electricity, the clutch 50 is controlled to disengage, such that the power of the engine 10 is completely transmitted to the first motor 11, and the first motor 11 is driven to generate electricity, which prevents the power of the engine 10 from being transmitted to the wheels and avoids power loss.

Optionally, as shown in FIG. 1, the hybrid power system further includes a second hollow shaft 37. The second hollow shaft 37 is movably sleeved over the second main shaft 22.

As shown in FIG. 1, the clutch 50 includes a clutch colar 403, a second steel plate 401, and a second clutch plate 402, the second steel plate 401 and the second clutch plate 402 are disposed in the clutch colar 403, the clutch colar 403 is coaxially connected to the second main shaft 22, the outer circumferential wall of the second steel plate 401 of the clutch 50 is connected to the inner wall of the clutch colar 403, the second clutch plate 402 of the clutch 50 is movably sleeved over the second hollow shaft 37 in an axial direction, and the second clutch plate 402 of the clutch 50 is circumferentially locked to the second hollow shaft 37.

As shown in FIG. 1, the input gear of the gear train 60 is coaxially connected to an end of the second hollow shaft 37, the output gear of the gear train 60 is coaxially connected to an end of the third main shaft 23, and the third main shaft 23 is configured to be drivingly connected to wheels.

For example, an axially extending clamping groove is disposed in the inner wall of the clutch colar 403, a projection is disposed on the outer circumferential wall of the second steel plate 401 of the clutch 50, and the projection can slide in the clamping groove along the axial direction of the clutch colar 403, such that the second steel plate 401 is circumferentially locked upon being mounted on the clutch colar 403.

For example, an axially extending clamping groove is disposed in the outer wall of the second hollow shaft 37, a projection is disposed on the hole wall of an inner hole of the second clutch plate 402 of the clutch 50, and the projection can slide in the clamping groove along the axial direction of the second hollow shaft 37, such that the second clutch plate 402 can be circumferentially locked to the second hollow shaft 37.

In the case that the clutch 50 needs to be controlled to engage, a driving apparatus controls the second steel plate 401 and the second clutch plate 402 to fit together, such that the second hollow shaft 37 is drivingly connected to the clutch colar 403. In this way, the power transmitted from the planetary gear train 30 to the clutch 50 is transmitted to the second hollow shaft 37 via the clutch 50, and then transmitted to the third main shaft 23 via the second hollow shaft 37 and the gear train 60. Finally, the power is transmitted to the wheels through the third main shaft 23 to drive the wheels to rotate.

In some embodiments of the present disclosure, each gear train 60 includes at least an input gear and an output gear, and the input gear and the output gear are drivingly connected to each other, such that the power is transmitted to the output gear via the input gear.

Optionally, in the gear train 60, the input gear and the output gear are directly engaged with each other. Alternatively, at least one connecting gear is disposed between the input gear and the output gear.

It should be noted that how many gears are specifically provided in the gear train 60 may be determined according to actual needs.

Those of ordinary skill in the art may understand that all or some of the steps for implementing the above embodiments may be completed by hardware, or may be completed by instructing related hardware by using a program. The program may be stored in a computer-readable storage medium. The above-mentioned storage medium may be a read-only memory, a magnetic disk, a compact disc, or the like.

The foregoing descriptions are merely preferred embodiments of the present disclosure, but are not intended to limit the present disclosure. Any modifications, equivalent replacements, improvements, and the like made without departing from the spirit and principle of the present disclosure shall fall within the protection scope of the present disclosure.

## Claims

1. A hybrid power system, comprising: an engine (10), a first motor (11), a planetary gear train (30), a first main shaft (21), and a second main shaft (22), wherein
the first main shaft (21) and the second main shaft (22) are coaxially spaced apart, a first end of the first main shaft (21) is drivingly connected to an output shaft of the engine (10), and the second main shaft (22) is configured to be drivingly connected to wheels;
the planetary gear train (30) comprises: a sun gear (31), a plurality of planetary gears (32), a planetary carrier (33), a ring gear (34), and a brake (35), wherein the ring gear (34) and the sun gear (31) are coaxially disposed, the plurality of planetary gears (32) are disposed between the sun gear (31) and the ring gear (34), and are engaged with the sun gear (31) and the ring gear (34), the planetary carrier (33) is coaxially connected to a second end of the first main shaft (21), the sun gear (31) is movably sleeved over the first main shaft (21), the brake (35) is configured to brake the sun gear (31), and the ring gear (34) is coaxially connected to the second main shaft (22); and
the planetary gear train (30) is disposed in a rotor (110) of the first motor (11), and an inner circumferential wall of the rotor (110) of the first motor (11) is connected to an outer circumferential wall of the ring gear (34).

2. The hybrid power system according to claim 1, wherein an axial length of the ring gear (34) is less than or equal to an axial length of the rotor (110) of the first motor (11).

3. The hybrid power system according to claim 1, further comprising a housing, wherein the first motor (11), the planetary gear train (30), and the second main shaft (22) are disposed in the housing, the first main shaft (21) is movably inserted in the housing, the first end of the first main shaft (21) is outside the housing, and the second end of the first main shaft (21) is in the housing.

4. The hybrid power system according to claim 3, wherein the planetary gear train (30) further comprises a first hollow shaft (36), wherein the first hollow shaft (36) is movably sleeved over the first main shaft (21), and an end of the first hollow shaft (36) is coaxially connected to the sun gear (31); and
the brake (35) comprises a first steel plate (351) and a first clutch plate (352), wherein an outer circumferential wall of the first steel plate (351) of the brake (35) is connected to an inner wall of the housing, the first clutch plate (352) of the brake (35) is movably sleeved over the first hollow shaft (36) in an axial direction, and the first clutch plate (352) of the brake (35) is circumferentially locked to the first hollow shaft (36).

5. The hybrid power system according to any one of claims 1 to 4, further comprising a clutch (50), a gear train (60), and a third main shaft (23), wherein the third main shaft (23) is parallel to the second main shaft (22); and
the clutch (50) is connected to an input gear of the gear train (60) and the second main shaft (22), an output gear of the gear train (60) is coaxially connected to the third main shaft (23), and the third main shaft (23) is configured to be drivingly connected to wheels.

6. The hybrid power system according to claim 5, further comprising a second hollow shaft (37), wherein the second hollow shaft (37) is movably sleeved over the second main shaft (22);
the clutch (50) comprises a clutch colar (403), a second steel plate (401), and a second clutch plate (402), wherein the second steel plate (401) and the second clutch plate (402) of the clutch (50) are disposed in the clutch colar (403), the clutch colar (403) is coaxially connected to the second main shaft (22), an outer circumferential wall of the second steel plate (401) of the clutch (50) is connected to an inner wall of the clutch colar (403), the second clutch plate (402) of the clutch (50) is movably sleeved over the second hollow shaft (37) in an axial direction, and the second clutch plate (402) of the clutch (50) is circumferentially locked to the second hollow shaft (37); and
the input gear of the gear train (60) is coaxially connected to an end of the second hollow shaft (37).

7. The hybrid power system according to claim 5, further comprising a second motor (12) and a first drive gear (71), wherein an output shaft of the second motor (12) is drivingly connected to the first drive gear (71), and the first drive gear (71) is engaged with the output gear of the gear train (60).

8. The hybrid power system according to claim 5, further comprising a second drive gear (72) and a differential (80), wherein the second drive gear (72) is fixedly sleeved over the third main shaft (23), the differential (80) is drivingly connected to the second drive gear (72), and the third main shaft (23) is drivingly connected to the wheels via the differential (80).

9. The hybrid power system according to any one of claims 1 to 4 and claims 6 to 8, further comprising a power supply assembly (90), wherein the power supply assembly (90) comprises: a battery (91) and an inverter (92), wherein the inverter (92) is separately connected to the battery (91) and the first motor (11).

10. A vehicle, comprising a vehicle body and a hybrid power system, wherein the hybrid power system is disposed in the vehicle body and comprises: an engine (10), a first motor (11), a planetary gear train (30), a first main shaft (21), and a second main shaft (22); wherein
the first main shaft (21) and the second main shaft (22) are coaxially spaced apart, a first end of the first main shaft (21) is drivingly connected to an output shaft of the engine (10), and the second main shaft (22) is configured to be drivingly connected to wheels;
the planetary gear train (30) comprises: a sun gear (31), a plurality of planetary gears (32), a planetary carrier (33), a ring gear (34), and a brake (35), wherein the ring gear (34) and the sun gear (31) are coaxially disposed, the plurality of planetary gears (32) are disposed between the sun gear (31) and the ring gear (34), and are engaged with the sun gear (31) and the ring gear (34), the planetary carrier (33) is coaxially connected to a second end of the first main shaft (21), the sun gear (31) is movably sleeved over the first main shaft (21), the brake (35) is configured to brake the sun gear (31), and the ring gear (34) is coaxially connected to the second main shaft (22), and
the planetary gear train (30) is disposed in a rotor (110) of the first motor (11), and an inner circumferential wall of the rotor (110) of the first motor (11) is connected to an outer circumferential wall of the ring gear (34).

11. The vehicle according to claim 10, wherein an axial length of the ring gear (34) is less than or equal to an axial length of the rotor (110) of the first motor (11).

12. The vehicle according to claim 10, wherein the hybrid power system further comprises a housing, the first motor (11), the planetary gear train (30), and the second main shaft (22) are disposed in the housing, the first main shaft (21) is movably inserted in the housing, the first end of the first main shaft (21) is outside the housing, and the second end of the first main shaft (21) is in the housing.

13. The vehicle according to claim 12, wherein the planetary gear train (30) further comprises a first hollow shaft (36), the first hollow shaft (36) is movably sleeved over the first main shaft (21), and an end of the first hollow shaft (36) is coaxially connected to the sun gear (31); and
the brake (35) comprises a first steel plate (351) and a first clutch plate (352), wherein an outer circumferential wall of the first steel plate (351) of the brake (35) is connected to an inner wall of the housing, the first clutch plate (352) of the brake (35) is movably sleeved over the first hollow shaft (36) in an axial direction, and the first clutch plate (352) of the brake (35) is circumferentially locked to the first hollow shaft (36).

14. The vehicle according to any one of claims 10 to 13, wherein the hybrid power system further comprises a clutch (50), a gear train (60), and a third main shaft (23), and the third main shaft (23) is parallel to the second main shaft (22); and
the clutch (50) is connected to an input gear of the gear train (60) and the second main shaft (22), an output gear of the gear train (60) is coaxially connected to the third main shaft (23), and the third main shaft (23) is configured to be drivingly connected to wheels.

15. The vehicle according to claim 14, wherein the hybrid power system further comprises a second hollow shaft (37), and the second hollow shaft (37) is movably sleeved over the second main shaft (22);
the clutch (50) comprises a clutch colar (403), a second steel plate (401), and a second clutch plate (402), wherein the second steel plate (401) and the second clutch plate (402) of the clutch (50) are disposed in the clutch colar (403), the clutch colar (403) is coaxially connected to the second main shaft (22), an outer circumferential wall of the second steel plate (401) of the clutch (50) is connected to an inner wall of the clutch colar (403), the second clutch plate (402) of the clutch (50) is movably sleeved over the second hollow shaft (37) in an axial direction, and the second clutch plate (402) of the clutch (50) is circumferentially locked to the second hollow shaft (37), and
the input gear of the gear train (60) is coaxially connected to an end of the second hollow shaft (37).
